(19) Europäisches Patentamt
European Patent Office
Office européen des brevets

(11) **EP 4 481 335 B1**

(12) **FASCICULE DE BREVET EUROPEEN**

(45) Date de publication et mention
de la délivrance du brevet:
**25.02.2026 Bulletin 2026/09**

(21) Numéro de dépôt: **24180617.3**

(22) Date de dépôt: **06.06.2024**

(51) Classification Internationale des Brevets (IPC):
**G01F 1/66** *(2022.01)*        **G01F 1/667** *(2022.01)*
**G01F 1/76** *(2006.01)*

(52) Classification Coopérative des Brevets (CPC):
**G01F 1/66; G01F 1/668;** G01F 1/76

(54) **MESURE DE DEBIT PAR DIFFERENCE D'AMPLITUDE**

STRÖMUNGSMESSUNG MIT AMPLITUDENDIFFERENZ

AMPLITUDE DIFFERENCE FLOW MEASUREMENT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.06.2023 FR 2306602**

(43) Date de publication de la demande:
**25.12.2024 Bulletin 2024/52**

(73) Titulaire: **SAGEMCOM ENERGY & TELECOM SAS 92270 Bois-Colombes (FR)**

(72) Inventeurs:
• **SABRAOUI, Abbas**
**92270 Bois-Colombes (FR)**
• **ABID, Oussama**
**92270 Bois-Colombes (FR)**
• **BASTURK, Ahmet Samed**
**92270 Bois-Colombes (FR)**

(74) Mandataire: **Cabinet Boettcher**
**5, rue de Vienne**
**75008 Paris (FR)**

(56) Documents cités:
GB-A- 2 423 363    JP-B2- 4 548 482
US-A- 4 726 235    US-A1- 2017 350 739

**Description**

L'invention concerne le domaine des compteurs de fluide à ultrasons.

ARRIERE PLAN DE L'INVENTION

Un compteur de fluide à ultrasons comporte très classiquement un conduit dans lequel circule le fluide, et un dispositif de mesure ultrasonique comprenant un transducteur amont (côté réseau) et un transducteur aval (côté installation de l'abonné). Chaque transducteur joue successivement le rôle d'un émetteur et d'un récepteur de signaux ultrasonores. Le transducteur amont émet ainsi un signal ultrasonore dans le conduit, qui est reçu par le transducteur aval après avoir parcouru dans le fluide un chemin prédéfini (de longueur parfaitement maîtrisée). Puis, le transducteur aval émet à son tour un signal ultrasonore, qui est reçu par le transducteur amont après avoir parcouru dans le fluide le chemin prédéfini (dans l'autre sens). Le dispositif de mesure ultrasonique évalue alors la vitesse du fluide à partir des temps de transit des signaux ultrasonores, puis le débit du fluide à partir de la vitesse du fluide. L'estimation du débit du fluide permet d'évaluer et de facturer la quantité de fluide consommée.

Le principe de fonctionnement du dispositif de mesure ultrasonique repose donc sur la mesure des temps de transit des signaux ultrasonores entre les deux transducteurs. Les équations de base sont les suivantes :

$$v = L \: / \: (t\_AB - t\_BA) \quad (\text{équation } 1),$$

où v est la vitesse du fluide, L est la distance entre les transducteurs, t_AB est le temps de transit entre le transducteur amont et le transducteur aval, et t_BA est le temps de transit entre le transducteur aval et le transducteur amont.

$$Q = A * v \quad (\text{équation } 2)$$

où Q est le débit volumétrique et A est la section transversale du conduit.

La mesure des temps de transit est classiquement réalisée en utilisant une méthode de « *Zero Crossing* », qui nécessite de détecter les alternances du signal reçu.

Cette méthode peut nécessiter de réaliser des mesures avec une résolution/précision de l'ordre de la picoseconde. Il est donc nécessaire d'intégrer un ASIC dans le dispositif de mesure ultrasonique, ce qui augmente le coût de celui-ci.

Par ailleurs, la mesure des temps de transit est sensible à la présence de bulles ou **d'impuretés** dans le fluide, qui peuvent créer des sauts d'alternance, faussant ainsi la mesure du débit.

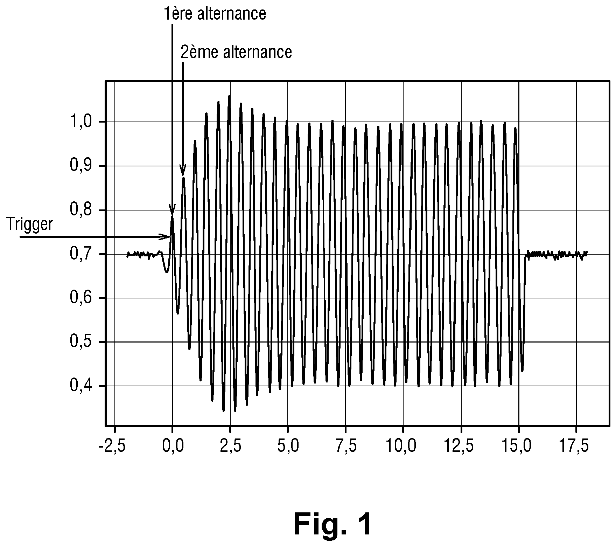

On voit sur la figure 1 un signal électrique produit par l'un des transducteurs à la réception d'un signal ultrasonore ayant parcouru le chemin prédéfini.

Le dispositif de mesure ultrasonique déclenche l'analyse du signal ultrasonore (et notamment le décompte des alternances) à partir de la détection de la première alternance. Si un saut d'alternance se produit, l'analyse se déclenche par exemple à partir de la deuxième alternance, ce qui dégrade de manière importante la précision de la mesure.

Pour résoudre ce problème, il est connu d'utiliser des modules de filtrage pour filtrer les mesures problématiques. Ces modules de filtrages sont relativement complexes à concevoir et nécessitent une certaine puissance de calcul. De plus, ces modules de filtrage présentent un certain nombre de faiblesses. Par exemple, il est possible qu'un utilisateur, ponctuellement, consomme un très fort débit de fluide, nettement supérieur à sa consommation habituelle. La mesure de ce débit risque alors d'être filtrée et non prise en compte par le compteur ; le pic de débit n'est alors pas facturé. Le document de l'art antérieur GB 2 423 363 A divulgue le préambule de la revendication 1.

OBJET DE L'INVENTION

L'invention a pour objet de réduire le coût d'un compteur de fluide à ultrasons ou d'augmenter la précision des mesures.

RESUME DE L'INVENTION

En vue de la réalisation de ce but, on propose un procédé de mesure, mis en œuvre par une unité de traitement dans un compteur comportant un conduit dans lequel circule un fluide et un dispositif de mesure ultrasonique comprenant un transducteur amont et un transducteur aval, le procédé de mesure comportant les étapes de :

- appliquer un signal électrique d'excitation aux bornes du transducteur amont de sorte que celui-ci génère dans le conduit un signal ultrasonore amont, et acquérir un signal électrique aval produit par le transducteur aval lorsque celui-ci reçoit le signal ultrasonore amont ;
- appliquer le signal électrique d'excitation aux bornes du transducteur aval de sorte que celui-ci génère dans le conduit un signal ultrasonore aval, et acquérir un signal électrique amont produit par le transducteur amont lorsque celui-ci reçoit le signal ultrasonore aval ;
- évaluer un débit du fluide dans le conduit en fonction d'une première valeur représentative d'une différence entre une amplitude du signal électrique amont et une amplitude du signal électrique aval.

Le procédé de mesure évalue donc le débit en fonction d'une différence d'amplitude entre les signaux électriques amont et aval. La différence d'amplitude est par exemple une différence de tension, qui est relativement simple à mesurer et pour laquelle la précision requise ne nécessite pas d'utiliser un ASIC (cette mesure peut par exemple être réalisée par un microcontrôleur). Il est donc possible de réduire le coût du dispositif de mesure ultrasonique et donc du compteur.

Le débit est aussi évalué en utilisant en plus une différence entre les temps de transit amont et aval. Ainsi, on ne réduit pas le coût du dispositif de mesure ultrasonique, mais on améliore grandement la précision et on consolide l'évaluation du débit en utilisant les deux grandeurs.

Le procédé de mesure tel que précédemment décrit, comprend en outre les étapes de :

- mesurer un temps de transit amont du signal ultrasonore amont entre le transducteur amont et le transducteur aval ;
- mesurer un temps de transit aval du signal ultrasonore aval entre le transducteur aval et le transducteur amont ;
- évaluer le débit du fluide en fonction à la fois de la première valeur, et d'une deuxième valeur représentative d'une différence entre le temps de transit amont et le temps de transit aval.

On propose de plus un procédé de mesure tel que précédemment décrit, dans lequel l'évaluation du débit du fluide est réalisée, à partir de la première valeur et de la deuxième valeur, en utilisant un modèle de régression multiple.

On propose de plus un procédé de mesure tel que précédemment décrit, comprenant les étapes de :

- mesurer la première valeur ;
- produire une première évaluation du débit du fluide en utilisant la première valeur ;

- mesurer la deuxième valeur ;
- produire une deuxième évaluation du débit du fluide en utilisant la deuxième valeur ;
- évaluer une troisième valeur représentative d'une différence ou d'un rapport entre la première évaluation et la deuxième évaluation ;
- si la troisième valeur est supérieure à un seuil prédéterminé, ne pas tenir compte de la première valeur et de la deuxième valeur ;
- si la troisième valeur est inférieure au seuil prédéterminé, produire une évaluation consolidée du débit du fluide en fonction de la première valeur et de la deuxième valeur.

On propose de plus un procédé de mesure tel que précédemment décrit, dans lequel la troisième valeur est égale à : $(Q2 - Q1)/(Q2)$,
où Q1 est la première évaluation et Q2 est la deuxième évaluation.

On propose de plus un compteur de fluide comportant un conduit dans lequel circule le fluide, un dispositif de mesure ultrasonique comprenant un transducteur amont et un transducteur aval, et une unité de traitement dans laquelle est mis en œuvre le procédé de mesure tel que précédemment décrit.

On propose de plus un programme d'ordinateur comprenant des instructions qui conduisent l'unité de traitement du compteur tel que précédemment décrit à exécuter les étapes du procédé de mesure tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés parmi lesquels :

[Fig. 1] la figure 1 représente un signal électrique produit par un transducteur lorsque celui-ci capture un signal ultrasonore ;

[Fig. 2] la figure 2 représente un compteur d'eau à ultrasons ;

[Fig. 3] la figure 3 représente un graphique comprenant une courbe de la différence d'amplitude entre les signaux électriques amont et aval, en fonction du débit ;

[Fig. 4] la figure 4 représente un graphique comprenant une courbe du signal électrique amont, et un graphique comprenant une courbe du signal électrique aval ;

[Fig. 5] la figure 5 représente un graphique comprenant une courbe de la différence entre les temps de transit amont et aval, en fonction du débit ;

[Fig. 6] la figure 6 représente des étapes du procédé de mesure.

## DESCRIPTION DETAILLEE DE L'INVENTION

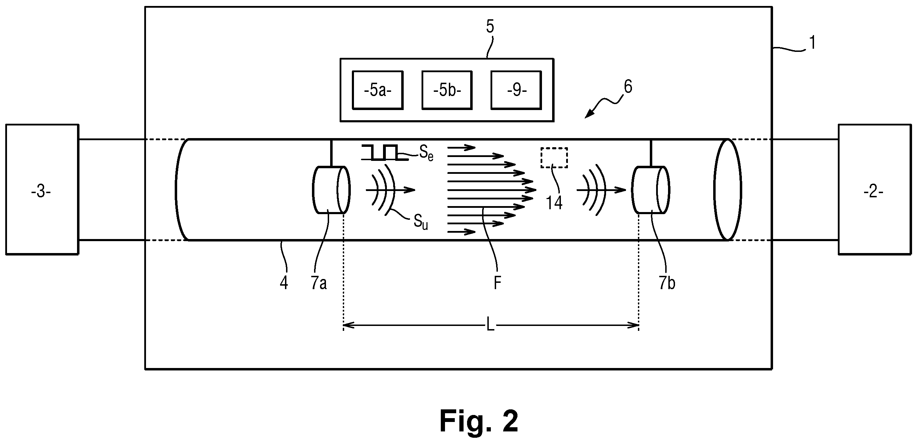

En référence à la figure 2, l'invention est mise en œuvre dans un compteur de fluide à ultrasons 1. Le compteur 1 est en l'occurrence ici un compteur d'eau, qui est utilisé pour mesurer la consommation d'eau de l'installation 2 d'un abonné. L'eau est fournie à l'installation 2 par un réseau de distribution d'eau 3.

Le compteur 1 comporte un conduit 4 dans lequel circule l'eau fournie par le réseau 3 à l'installation 2. L'eau circule dans le conduit 4 d'amont en aval, comme cela est indiqué par le sens des flèches F. Ici, par « en amont », on entend du côté du réseau 3, et par « en aval », on entend du côté de l'installation 2.

Le compteur 1 comporte une unité de traitement 5 (électronique et logicielle). L'unité de traitement 5 comprend au moins un composant de traitement 5a, qui est par exemple un processeur « généraliste », un processeur spécialisé dans le traitement du signal (ou DSP, pour *Digital Signal Processor),* un microcontrôleur, ou bien un circuit logique programmable tel qu'un FPGA (pour *Field Programmable Gate Arrays)* ou un ASIC (pour *Application Specific Integrated Circuit).* L'unité de traitement 5 comprend aussi une ou des mémoires 5b, reliées à ou intégrées dans le composant de traitement 5a. Au moins l'une de ces mémoires 5b forme un support d'enregistrement lisible par ordinateur, sur lequel est enregistré au moins un programme d'ordinateur comprenant des instructions qui conduisent le composant de traitement 5a à exécuter au moins certaines des étapes du procédé de mesure qui sera décrit plus bas.

Le compteur 1 comprend aussi un dispositif de mesure ultrasonique 6. Le dispositif de mesure ultrasonique 6 est utilisé pour mesurer le débit d'eau fourni à l'installation 2 par le réseau 3.

Le dispositif de mesure ultrasonique 6 comporte un transducteur amont 7a et un transducteur aval 7b. Le dispositif de mesure ultrasonique 6 comporte aussi un module de calcul 9, intégré ici dans l'unité de traitement 5, qui réalise les évaluations du débit.

Le transducteur amont 7a et le transducteur aval 7b sont avantageusement (mais pas nécessairement) appairés. Le transducteur amont 7a et le transducteur aval 7b sont ici des transducteurs piézoélectriques.

Chaque transducteur 7a, 7b joue successivement le rôle d'un émetteur et d'un récepteur de signaux ultrasonores.

L'unité de traitement 5 génère un signal électrique d'excitation Se, et fournit à l'émetteur le signal électrique d'excitation. L'émetteur génère alors un signal ultrasonore Su. Le récepteur reçoit le signal ultrasonore après que celui-ci a parcouru dans le fluide un chemin prédéfini.

Le chemin prédéfini est ici un chemin direct (parallèle par rapport à un axe longitudinal du conduit 4, comme c'est le cas sur la figure 2, ou incliné par rapport audit axe). Le chemin prédéfini pourrait aussi être un chemin indirect : les signaux ultrasonores sont réfléchis contre la paroi interne du conduit 4 (éventuellement contre des réflecteurs eux-mêmes situés sur la paroi interne).

Le chemin prédéfini a une longueur L, qui est connue très précisément.

Ainsi, l'unité de traitement 5 applique tout d'abord le signal électrique d'excitation aux bornes du transducteur amont 7a de sorte que celui-ci génère dans le conduit 4 un signal ultrasonore amont. L'unité de traitement 5 acquiert un signal électrique aval produit par le transducteur aval 7b lorsque celui-ci reçoit le signal ultrasonore amont.

Puis, l'unité de traitement 5 applique le signal électrique d'excitation aux bornes du transducteur aval 7b de sorte que celui-ci génère dans le conduit 4 un signal ultrasonore aval. L'unité de traitement 5 acquiert un signal électrique amont produit par le transducteur amont 7a lorsque celui-ci reçoit le signal ultrasonore aval.

L'unité de traitement 5 analyse le signal électrique aval et le signal électrique amont pour évaluer le débit de l'eau dans le conduit 4.

Une nouvelle manière d'évaluer le débit a été identifiée.

On a constaté, suite à de nombreux tests et à de nombreuses investigations et analyses, que le débit du fluide peut être évalué à partir d'une valeur représentative de la différence entre l'amplitude du signal électrique amont et l'amplitude du signal électrique aval.

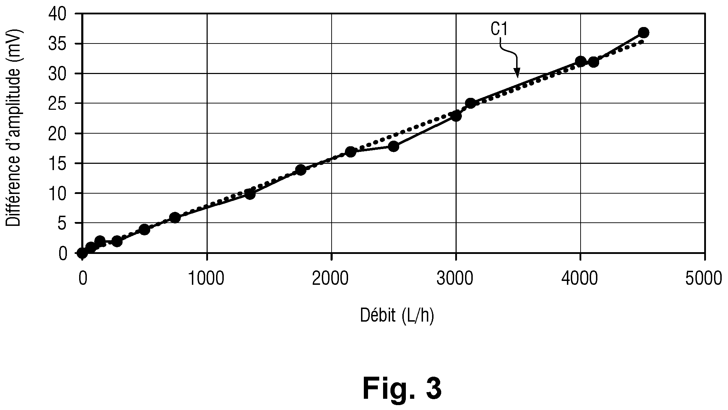

On voit sur la figure 3 la corrélation entre la différence d'amplitude et le débit. La courbe C1 a été obtenue par un grand nombre de mesures réalisées sur un grand nombre de compteurs.

Lorsqu'un saut d'alternance se produit, la différence d'amplitude ne suit pas cette corrélation linéaire, ce qui indique que la mesure est faussée.

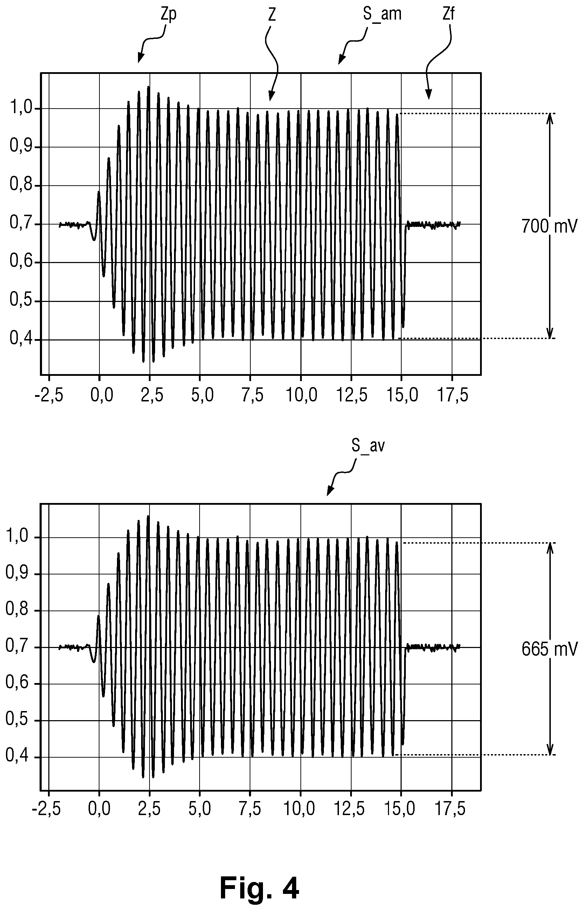

On voit le signal électrique amont S_am et le signal électrique aval S_av sur la figure 4.

Ici, par « amplitude » du signal électrique (amont ou aval), on entend une valeur représentative d'une amplitude crête-crête du signal électrique (amont ou aval) lorsqu'une variation de ladite amplitude crête-crête devient inférieure à un seuil de variation prédéfini (qui par exemple égal à 5% ou 10%).

Il s'agit par exemple d'une valeur moyenne de l'amplitude crête-crête dans une zone prédéfinie Z, située entre une zone préliminaire Zp et une zone finale Zf du signal électrique (amont ou aval). Ici, la zone prédéfinie comprend par exemple les lobes entre le 12ème lobe et le 31ème lobe.

Il pourrait aussi s'agir de l'amplitude crête-crête entre un lobe positif et un lobe négatif prédéterminés, par exemple le 22ème lobe positif et le lobe négatif suivant.

Il pourrait aussi s'agir d'une moyenne des amplitudes maximales de lobes positifs dans une zone prédéfinie, ou bien de l'amplitude maximale d'un lob prédéfini, etc.

Sur la figure 4, on voit que l'amplitude crête-crête dans la zone prédéfinie du signal électrique amont S_am est égale à 700 mV et que l'amplitude crête-crête du signal électrique aval S_av est égale à 665 mV.

L'origine de l'écart d'amplitude des signaux électriques amont et aval à l'écoulement peut être attribuée à la dispersion, qui est un phénomène qui provoque la modification de l'amplitude des signaux ultrasonores lorsqu'ils se propagent à travers le fluide. La dispersion est influencée par les caractéristiques du fluide, telles que la viscosité, la densité et la présence de bulles ou d'impuretés.

Ainsi, le procédé de mesure consiste à évaluer un débit du fluide dans le conduit 4 en fonction d'une première valeur représentative d'une différence entre une amplitude du signal électrique amont S_am et une amplitude du signal électrique aval S_av.

On peut utiliser l'équation qui suit :

$$\Delta V = 0.0079 \times \text{débit} - 0.0477 \text{ (équation 1)},$$

où $\Delta V$ est une différence entre l'amplitude du signal électrique amont S_am et l'amplitude du signal électrique aval S_av (l'amplitude de chaque signal étant la moyenne de l'amplitude crête-crête dans la zone prédéfinie).

L'unité de traitement 5 évalue donc le débit d'eau dans le conduit 4 en fonction d'une première valeur représentative d'une différence entre l'amplitude du signal électrique amont et une amplitude du signal électrique aval.

Ici, pour consolider la mesure, l'unité de traitement 5 utilise aussi les temps de transit pour évaluer le débit d'eau.

L'unité de traitement 5 analyse le signal électrique aval S_av pour mesurer le temps de transit amont entre le transducteur amont 7a et le transducteur aval 7b, et le signal électrique amont S_am pour mesurer le temps de transit aval entre le transducteur aval 7b et le transducteur amont 7a.

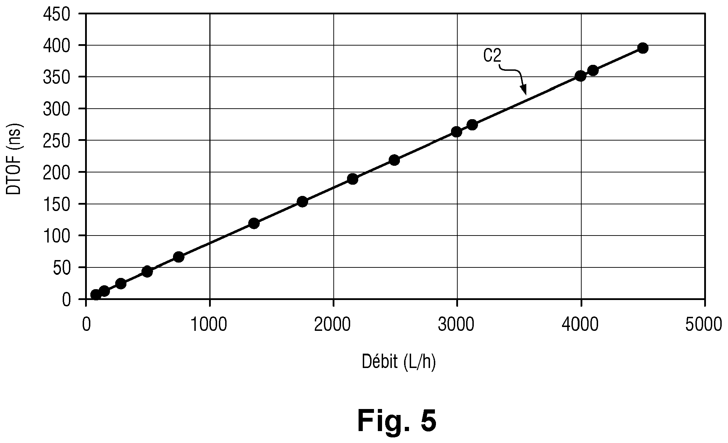

On voit sur la figure 5 la courbe C2 qui représente la corrélation entre le débit et la différence entre les temps de transit.

On peut utiliser par exemple l'équation qui suit :

$$DTOF = 0.0876 \times \text{débit} + 0.686 \text{ (équation 2)},$$

où DTOF est la différence entre le temps de transit amont et le temps de transit aval.

L'unité de traitement 5 évalue donc le débit d'eau en fonction à la fois de la première valeur représentative de la différence entre l'amplitude du signal électrique amont et l'amplitude du signal électrique aval, et d'une deuxième valeur représentative de la différence entre le temps de transit amont et le temps de transit aval.

On a donc deux équations :

$$\Delta V = 0.0079 \times \text{débit} - 0.0477 \text{ (équation 1)}$$

$$DTOF = 0.0876 \times \text{débit} + 0.686 \text{ (équation 2)}.$$

Pour améliorer la précision de la mesure, l'unité de traitement 5 combine

les mesures de différence d'amplitude avec les mesures de différence de temps de transit.

On utilise pour cela un modèle de régression multiple.

Le modèle de régression multiple est une méthode statistique utilisée pour analyser les relations entre plusieurs variables. Ici, on a deux variables indépendantes ($\Delta V$ et DTOF) et une variable dépendante (débit). Il est possible d'utiliser un modèle de régression multiple pour estimer le débit à partir des mesures de $\Delta V$ et de DTOF.

On utilise ici un modèle de régression linéaire multiple :

$$\text{débit} = a * (DTOF - 0.686) + b * (\Delta v + 0.0477)$$

Dans cet exemple, "a" et "b" sont les coefficients de régression à déterminer à partir des mesures effectuées. Ce modèle de régression multiple combine les informations des deux équations inversées pour estimer le débit en fonction des mesures de $\Delta V$ et de DTOF simultanément. Contrairement aux modèles univariés, ce modèle permet d'exploiter les informations fournies par les deux variables indépendantes pour obtenir une estimation plus précise et plus fiable du débit.

Pour calibrer ce modèle, on a besoin d'un ensemble de données contenant des mesures de débit, de $\Delta V$ et de DTOF. En utilisant ces données, il est possible de déterminer les coefficients "a" et "b" qui minimisent la somme des erreurs quadratiques entre les débits observés et les débits prédits par le modèle.

Une fois le modèle calibré, on peut l'utiliser pour estimer le débit à partir de nouvelles mesures de $\Delta V$ et de DTOF.

Les coefficients "a" et "b" sont déterminés en usine en utilisant des données produites par un certain nombre de compteurs (par exemple 100 compteurs), qui sont représentatifs des compteurs qui seront produits en production de masse (même hydraulique, transducteurs identiques, même géométrie, etc.). L'équation du modèle est injectée dans le module de calcul 9 de l'unité de traitement 5, qui récupérera par la suite les mesures de DTOF et de $\Delta V$, et calculera le débit.

A titre d'exemple, en utilisant les deux équations 1 et 2, on obtient :

$$\text{débit} = (\Delta V + 0.0477) / 0.0079 \text{ (issue de l'équation 1)}$$

$$\text{débit} = (DTOF - 0.686) / 0.0876 \text{ (issue de l'équation 2)}$$

On égalise ces deux expressions pour le débit, et on obtient :

$$(DTOF - 0.686) / 0.0876 = (\Delta V + 0.0477) / 0.0079$$

On peut simplifier cette équation pour obtenir :

$$DTOF \times 0.0079 - \Delta V \times 0.0876 = 0.005246$$

En réorganisant cette équation, on obtient finalement une expression pour le débit en fonction de $\Delta V$ et de DTOF :

Débit = $(0.0876 \times \Delta V + 0.0079 \times DTOF - 0.005246) / 0.0803$

On obtient donc une troisième équation :

débit = $(0.0876 \times \Delta V + 0.0079 \times DTOF - 0.005246) / 0.0803$, et donc

$$\text{débit} = 1.09\ \Delta V + 0.098\ DTOF - 0.0653 \text{ (équation 3).}$$

L'unité de traitement 5 produit une évaluation consolidée du débit d'eau en fonction de la première valeur (différence entre les amplitudes) et de la deuxième valeur (différence entre les temps de transit).

L'unité de traitement 5 peut en outre déterminer si la mesure du débit est exacte ou erronée.

Pour cela, on utilise les deux équations qui relient le débit aux DTOF et le débit aux $\Delta V$:

$$\text{débit} = (\Delta V + 0.0477) / 0.0079 \text{ (issue de l'équation 1)}$$

$$\text{débit} = (DTOF - 0.686) / 0.0876 \text{ (issue de l'équation 2)}$$

A chaque fois que l'unité de traitement 5 mesure un DTOF et un $\Delta V$, l'unité de traitement 5 va évaluer les deux débits séparément et, si une valeur représentative d'une différence ou **d'un** rapport entre les deux résultats est inférieure à un seuil prédéterminé (par exemple égal à 5 %), l'unité de traitement 5 considère que les évaluations sont valides et produit une évaluation consolidée en utilisant l'équation 3.

Par contre, si la valeur représentative d'une différence ou d'un rapport entre les deux résultats est supérieure à ce seuil prédéterminé, la mesure sera considérée comme erronée et sera donc refusée par l'unité de traitement 5. L'unité de traitement 5 remplacera la mesure erronée par la dernière mesure valide et relèvera une alarme pour signaler la mesure refusée en indiquant l'écart constaté entre les deux débits issus des deux équations.

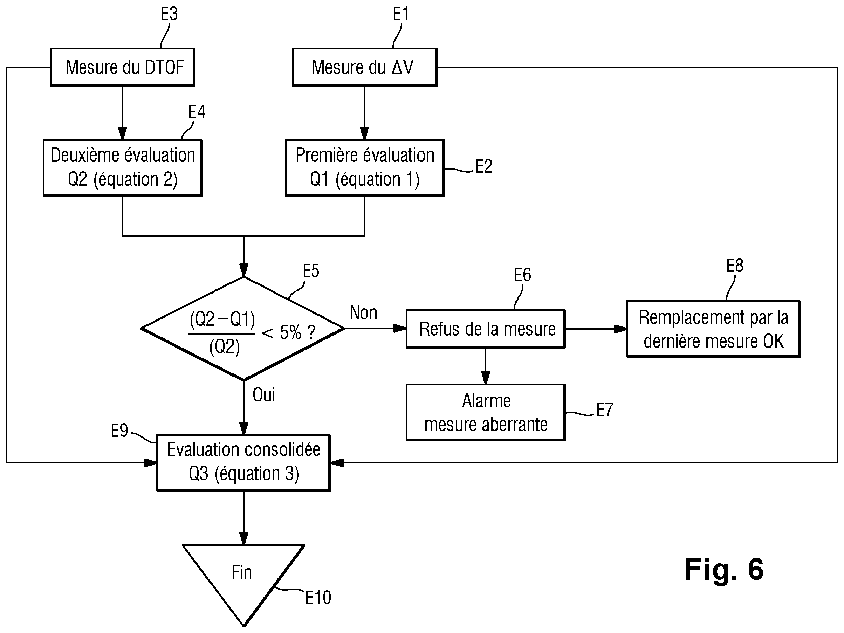

On décrit maintenant le procédé de mesure, en référence à la figure 6.

L'unité de traitement 5 mesure une première valeur représentative d'une différence entre une amplitude du signal électrique amont et une amplitude du signal électrique aval : étape E1. La première valeur est ici égale à cette différence $\Delta V$.

Puis, l'unité de traitement 5 produit une première évaluation Q1 du débit d'eau en utilisant la première valeur $\Delta V$ : étape E2.

L'unité de traitement 5 mesure une deuxième valeur représentative d'une différence entre le temps de transit amont et le temps de transit aval : étape E3. La deuxième valeur est ici égale à cette différence DTOF.

Puis, l'unité de traitement 5 produit une deuxième évaluation Q2 du débit d'eau en utilisant la deuxième valeur : étape E4.

L'unité de traitement 5 évalue une troisième valeur représentative d'une différence ou d'un rapport entre la première évaluation et la deuxième évaluation : étape E5.

Ici, cette troisième valeur est égale à :

$$(Q2 - Q1)/(Q2),$$

Où Q1 est la première évaluation du débit d'eau et Q2 est la deuxième évaluation du débit d'eau.

L'unité de traitement 5 compare cette troisième valeur avec le seuil prédéterminé (de 5% par exemple).

Si cette troisième valeur est supérieure au seuil prédéterminé (ici supérieur ou égal), l'unité de traitement 5 refuse la mesure : étape E6. L'unité de traitement 5 ne tient pas compte de la première valeur et de la deuxième valeur. L'unité de traitement 5 génère une alarme indiquant que la mesure est aberrante : étape E7. L'unité de traitement 5 remplace l'évaluation « présente » du débit d'eau par la dernière évaluation valide : étape E8.

A l'étape E5, si la troisième valeur est inférieure au seuil prédéterminé (ici strictement), l'unité de traitement 5 produit une évaluation consolidée Q3 en fonction de la première valeur et de la deuxième valeur : étape E9. L'unité de traitement 5 utilise l'équation 3.

Le procédé s'achève : étape E10.

L'invention présente les avantages suivants.

L'évaluation du débit est réalisée en utilisant uniquement les différences d'amplitude des signaux électriques amont et aval. Cette manière d'évaluer le débit ne nécessite pas d'utiliser un ASIC, ce qui peut permettre de réduire le coût du dispositif de mesure ultrasonique 6 et donc du compteur 1.

L'invention permet aussi d'améliorer la précision de l'évaluation du débit. En combinant les informations du $\Delta V$ et du DTOF, le procédé et le dispositif de l'invention permettent d'améliorer la précision des compteurs à ultrasons, réduisant ainsi les erreurs de mesure causées par les sauts d'alternance et les faiblesses des modules de filtrage traditionnels.

L'invention permet en effet de vérifier si une mesure de débit est exacte ou erronée (par exemple à cause d'un saut d'alternance créé par une bulle d'air, d'une variation de température, ou d'un *trigger* mal configuré).

L'invention permet de filtrer un point de mesure aberrant en combinant les deux informations (différence d'amplitude, différence de temps de transit).

L'invention permet aussi de protéger le distributeur de fluide contre les pertes de revenus. Contrairement aux modules de filtrage traditionnels, qui peuvent laisser passer des débits élevés non facturés, le procédé de l'invention permet de détecter et de corriger les erreurs de mesure liées aux sauts d'alternance, assurant ainsi une facturation plus précise et équitable.

L'approche proposée par l'invention est plus simple et plus facile à mettre en œuvre que les modules de filtrage complexes traditionnellement utilisés pour résoudre ce problème. La mesure des signaux ultrasoniques est possiblement déjà effectuée pour déterminer le temps de transit (dans le cas où la mesure utilise à la fois les temps de transit et la différence d'amplitude), et l'utilisation de ces signaux pour calculer l'écart d'amplitude en amont et en aval ne nécessite pas de mesures supplémentaires. Ainsi, cette méthode exploite pleinement les données existantes, sans ajouter de complexité ni de coûts supplémentaires à l'instrumentation ou au traitement des données.

Le procédé et le dispositif de l'invention peuvent être appliqués à différents types de compteurs à ultrasons et de fluide, offrant ainsi une solution polyvalente pour améliorer la précision des mesures de débit.

En améliorant la précision des compteurs à ultrasons, l'invention permet de réaliser des économies en réduisant les erreurs de mesure et en améliorant la gestion des ressources en eau.

L'invention s'applique bien sûr quels que soient le positionnement et la configuration du transducteur amont et du transducteur aval. Les signaux ultrasonores peuvent être émis avec une orientation d'un angle quelconque par rapport à un axe longitudinal du conduit.

Le chemin prédéfini entre les transducteurs n'est pas nécessairement un chemin direct. Les signaux ultrasonores, émis et reçus dans le conduit par les transducteurs, pourraient par exemple être réfléchis par des réflecteurs (par exemple par des miroirs orientés à 45°).

L'invention ne s'applique bien sûr pas uniquement à un compteur d'eau, mais à tout compteur de tout fluide : gaz, pétrole, etc.

On a utilisé un modèle de régression linéaire multivariée pour évaluer le débit en fonction du DTOF et du $\Delta$V. Le débit pourrait être évalué de manière différente à partir de ces grandeurs, et par exemple en utilisant un filtre de Kalman ou un filtre à moyennes pondérées.

On a indiqué que la première valeur est représentative d'une différence entre une amplitude du signal électrique amont et une amplitude du signal électrique aval. Il ne s'agit donc pas nécessairement de la différence entre l'amplitude du signal électrique amont et l'amplitude du signal électrique aval. Il pourrait par exemple s'agir de la différence entre l'amplitude du signal électrique aval et l'amplitude du signal électrique amont.

Ceci est aussi vrai pour la deuxième valeur représentative d'une différence entre le temps de transit amont et le temps de transit aval, et pour la troisième valeur représentative d'une différence ou d'un rapport entre la première évaluation et la deuxième évaluation.

## Revendications

1. Procédé de mesure, mis en œuvre par une unité de traitement (5) dans un compteur (1) comportant un conduit (4) dans lequel circule un fluide et un dispositif de mesure ultrasonique (6) comprenant un transducteur amont (7a) et un transducteur aval (7b), le procédé de mesure comportant les étapes de :

   - appliquer un signal électrique d'excitation (Se) aux bornes du transducteur amont de sorte que celui-ci génère dans le conduit un signal ultrasonore amont, et acquérir un signal électrique aval (S_av) produit par le transducteur aval lorsque celui-ci reçoit le signal ultrasonore amont ;
   - appliquer le signal électrique d'excitation aux bornes du transducteur aval de sorte que celui-ci génère dans le conduit un signal ultrasonore aval, et acquérir un signal électrique amont (S_am) produit par le transducteur amont lorsque celui-ci reçoit le signal ultrasonore aval ;
   - évaluer un débit du fluide dans le conduit en fonction d'une première valeur ($\Delta$V) représentative d'une différence entre une amplitude du signal électrique amont et une amplitude du signal électrique aval, **caractérisé en ce que** le procédé de mesure comprend en outre les étapes de :
   - mesurer un temps de transit amont du signal ultrasonore amont entre le transducteur amont (7a) et le transducteur aval (7b) ;
   - mesurer un temps de transit aval du signal ultrasonore aval entre le transducteur aval (7b) et le transducteur amont (7a) ;
   - évaluer le débit du fluide en fonction à la fois de la première valeur, et d'une deuxième valeur (DTOF) représentative d'une différence entre le temps de transit amont et le temps de transit aval.

2. Procédé de mesure selon la revendication 1, dans lequel l'évaluation du débit du fluide est réalisée, à partir de la première valeur et de la deuxième valeur, en utilisant un modèle de régression multiple.

3. Procédé de mesure selon la revendication 1, comprenant les étapes de :

   - mesurer la première valeur ($\Delta$V) ;
   - produire une première évaluation (Q1) du débit du fluide en utilisant la première valeur ;
   - mesurer la deuxième valeur (DTOF) ;
   - produire une deuxième évaluation (Q2) du débit du fluide en utilisant la deuxième valeur ;
   - évaluer une troisième valeur représentative d'une différence ou d'un rapport entre la première évaluation et la deuxième évaluation ;
   - si la troisième valeur est supérieure à un seuil prédéterminé, ne pas tenir compte de la première valeur et de la deuxième valeur ;
   - si la troisième valeur est inférieure au seuil prédéterminé, produire une évaluation consolidée (Q3) du débit du fluide en fonction de la première valeur et de la deuxième valeur.

4. Procédé de mesure selon la revendication 3, dans lequel la troisième valeur est égale à : (Q2 - Q1)/(Q2), où Q1 est la première évaluation et Q2 est la deuxième évaluation.

5. Compteur de fluide comportant un conduit (4) dans lequel circule le fluide, un dispositif de mesure ultrasonique (6) comprenant un transducteur amont (7a) et un transducteur aval (7b), et une unité de traitement (5) dans laquelle est mis en œuvre le procédé de mesure selon l'une des revendications précédentes.

6. Programme d'ordinateur comprenant des instructions qui conduisent l'unité de traitement (5) du compteur (1) selon la revendication 5 à exécuter les étapes du procédé de mesure selon l'une des revendications 1 à 4.

7. Support d'enregistrement lisible par ordinateur, sur lequel est enregistré le programme d'ordinateur selon la revendication 6.

**Patentansprüche**

1. Messverfahren, welches von einer Verarbeitungseinheit (5) in einem Zähler (1) mit einer Leitung (4), in welcher ein Fluid zirkuliert, und mit einer Ultraschall-Messvorrichtung (6), die einen Upstream-Wandler (7a) und einen Downstream-Wandler (7b) umfasst, ausgeführt wird, wobei das Messverfahren die Schritte enthält, dass:

   - ein elektrisches Anregungssignal (Se) an die Klemmen des Upstream-Wandlers angelegt wird, sodass dieser in der Leitung ein Upstream-Ultraschallsignal erzeugt, und dass ein Downstream-Elektrosignal (S_av) erfasst wird, das von dem Downstream-Wandler erzeugt wird, wenn dieser das Upstream-Ultraschallsignal empfängt;
   - das elektrische Anregungssignal an die Klemmen des Downstream-Wandlers angelegt wird, sodass dieser in der Leitung ein Downstream-Ultraschallsignal erzeugt, und dass ein Upstream-Elektrosignal (S_am) erfasst wird, das von dem Upstream-Wandler erzeugt wird, wenn dieser das Downstream-Ultraschallsignal empfängt;
   - in Abhängigkeit von einem ersten Wert ($\Delta V$), der eine Differenz zwischen einer Amplitude des Upstream-Elektrosignals und einer Amplitude des Downstream-Elektrosignals darstellt, ein Fluiddurchfluss in der Leitung ausgewertet wird, **dadurch gekennzeichnet, dass** das Messverfahren ferner die Schritte umfasst, dass:
   - eine Upstream-Laufzeit des Upstream-Ultraschallsignals zwischen dem Upstream-Wandler (7a) und dem Downstream-Wandler (7b) gemessen wird;
   - eine Downstream-Laufzeit des Downstream-Ultraschallsignals zwischen dem Downstream-Wandler (7b) und dem Upstream-Wandler (7a) gemessen wird;
   - der Fluiddurchfluss sowohl in Abhängigkeit von dem ersten Wert als auch von einem zweiten Wert (DTOF), der eine Differenz zwischen der Upstream-Laufzeit und der Downstream-Laufzeit darstellt, ausgewertet wird.

2. Messverfahren nach Anspruch 1, wobei die Auswertung des Fluiddurchflusses anhand des ersten Wertes und des zweiten Wertes unter Verwendung eines multiplen Regressionsmodells durchgeführt wird.

3. Messverfahren nach Anspruch 1, umfassend die Schritte, dass:

   - der erste Wert ($\Delta V$) gemessen wird;
   - unter Verwendung des ersten Wertes eine erste Auswertung (Q1) des Fluiddurchflusses erstellt wird;
   - der zweite Wert (DTOF) gemessen wird;
   - unter Verwendung des zweiten Wertes eine zweite Auswertung (Q2) des Fluiddurchflusses erstellt wird;
   - ein dritter Wert, der eine Differenz oder ein Verhältnis zwischen der ersten Auswertung und der zweiten Auswertung darstellt, ausgewertet wird;
   - wenn der dritte Wert größer als ein vorbestimmter Schwellenwert ist, der erste Wert und der zweite Wert unberücksichtigt bleiben;
   - wenn der dritte Wert kleiner als der vorbestimmte Schwellenwert ist, in Abhängigkeit von dem ersten Wert und dem zweiten Wert eine konsolidierte Auswertung (Q3) des Fluiddurchflusses erstellt wird.

4. Messverfahren nach Anspruch 3, wobei der dritte Wert wie folgt ermittelt wird: (Q2 - Q1)/(Q2),
   wobei es sich bei Q1 um die erste Auswertung und bei Q2 um die zweite Auswertung handelt.

5. Fluidzähler, enthaltend eine Leitung (4), in welcher ein Fluid zirkuliert, eine Ultraschall-Messvorrichtung (6), die einen Upstream-Wandler (7a) und einen Downstream-Wandler (7b) umfasst, sowie eine Verarbeitungseinheit (5), in welcher das Messverfahren nach einem der vorhergehenden Ansprüche ausgeführt wird.

6. Computerprogramm, das Befehle umfasst, welche die Verarbeitungseinheit (5) des Zählers (1) nach Anspruch 5 dazu veranlassen, die Schritte des Messverfahrens nach einem der Ansprüche 1 bis 4 auszuführen.

7. Computerlesbares Speichermedium, auf welchem das Computerprogramm nach Anspruch 6 abgespeichert ist.

**Claims**

1. Measuring method, implemented by a processing unit (5) in a meter (1) comprising a conduit (4), in which a fluid circulates and an ultrasonic measuring device (6) comprising an upstream transducer (7a) and a downstream transducer (7b), the measuring method comprising the steps of:

   - applying an excitation electrical signal (Se) to the terminals of the upstream transducer, so that it generates an upstream ultrasonic signal in the conduit and acquiring a downstream electrical signal (S_av) produced by the downstream transducer when it receives the upstream ultrasonic signal;
   - applying the excitation electrical signal to the terminals of the downstream transducer, so that it generates a downstream ultrasonic signal in the conduit and acquiring an upstream electrical signal (S_am) produced by the upstream transducer when it receives the downstream ultrasonic signal;
   - evaluating a flow rate of the fluid in the conduit according to a first value ($\Delta$V) representative of a difference between an amplitude of the upstream electrical signal and an amplitude of the downstream electrical signal, **characterized in that** the measuring method comprises the steps of :
   - measuring an upstream transit time of the upstream ultrasonic signal between the upstream transducer (7a) and the downstream transducer (7b);
   - measuring a downstream transit time of the downstream ultrasonic signal between the downstream transducer (7b) and the upstream transducer (7a);
   - evaluating the flow rate of the fluid according to both the first value and of a second value (DTOF), representative of a difference between the upstream transit time and the downstream transit time.

2. Measuring method according to claim 1, in which the evaluation of the flow rate of the fluid is performed, from the first value and from the second value by using a multiple regression model.

3. Measuring method according to claim 1, comprising the steps of:

   - measuring the first value ($\Delta$V);
   - producing a first evaluation (Q1) of the flow rate of the fluid by using the first value;
   - measuring the second value (DTOF);
   - producing a second evaluation (Q2) of the flow rate of the fluid by using the second value;
   - evaluating a third value, representative of a difference or of a ratio between the first evaluation and the second evaluation;
   - if the third value is greater than a predetermined threshold, do not consider the first value and the second value;
   - if the third value is less than the predetermined threshold, produce a consolidated evaluation (Q3) of the flow rate of the fluid according to the first value and the second value.

4. Measuring method according to claim 3, in which the third value is equal to: (Q2 - Q1)/(Q2),
   where Q1 is the first evaluation and Q2 is the second evaluation.

5. Fluid meter comprising a conduit (4) in which the fluid circulates, an ultrasonic measuring device (6) comprising an upstream transducer (7a) and a downstream transducer (7b), and a processing unit (5), in which the measuring method according to one of the preceding claims is implemented.

6. Computer program comprising instructions which lead the processing unit (5) of the meter (1) according to claim 5 to execute the steps of the measuring method according to one of claims 1 to 4.

7. Computer-readable recording medium on which the computer program according to claim 6 is recorded.

**Fig. 1**

**Fig. 2**

EP 4 481 335 B1

Fig. 3

**Fig. 4**

**Fig. 5**

Fig. 6

EP 4 481 335 B1

**EP 4 481 335 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2423363 A